# EUROPEAN PATENT SPECIFICATION

(11) **EP 1 548 319 B1**
(45) Date of publication and mention of the grant of the patent: **04.02.2009**
(21) Application number: 04029895.2
(22) Date of filing: 16.12.2004
(51) Int. Cl.: F16F 1/44

(54) **Vibration isolating damper**
Schwingungsisolierender Dämpfer
Isolateur amortisseur de vibrations

(30) Priority: 23.12.2003 ES 200303037; 13.05.2004 ES 200401153
(43) Date of publication of application: 29.06.2005
(73) Proprietor: Suspensiones Elasticas Del Norte, S.L., 14014 Cordoba (ES)
(72) Inventor: Munoz Molina, Juan, 14014 Cordoba (ES)
(74) Representative: Pons Arino, Angel

(56) References cited:
- CH-A- 251 207
- DE-U- 1 629 392
- GB-A- 1 111 993
- GB-A- 2 108 236
- US-A- 2 359 941
- US-A- 6 070 381
- PATENT ABSTRACTS OF JAPAN vol. 008, no. 032 (M-275), 10 February 1984 (1984-02-10) & JP 58 188719 A (NISSAN JIDOSHA KK), 4 November 1983 (1983-11-04)
- PATENT ABSTRACTS OF JAPAN vol. 008, no. 270 (M-344), 11 December 1984 (1984-12-11) & JP 59 140930 A (HINO JIDOSHA KOGYO KK), 13 August 1984 (1984-08-13)

## Description

The present description relates to an adjustable acoustic damper used in construction for the installation of floating concrete floors and adjustable beds, reducing the acoustic effects and vibrations that may be generated, mainly characterised in that it comprises a rubber silent block on a metal base and a base of the same elastic material, disposed with height adjustment means.

The need to install floating floors to provide acoustic isolation and prevent vibrations is known.

Multiple and varied types of isolators are known at present, with the most basic being simple rubber wedges that are not height adjustable in any way, and as a consequence the alignment and balancing of the panel or machine they have to support becomes difficult.

Utility Model ES 12066094, "Amortiguador de sonido y vibraciones regulable en bancada o suelos flotantes de hormigón" ("Sound and vibration damper adjustable on beds or floating concrete floors"), discloses a complex adjustment system based on screws, designed for adjustable beds, but of little use for a floating concrete floor, as the screw must be handled in order to adjust it, which exceeds the floor level, once this has been suspended, thus malting it extremely difficult to cover the floor with decorative flooring, in addition to providing a complex assembly system.

A first embodiment of the adjustable acoustic damper has been devised, which consists principally of two clearly differentiated parts, essentially square in shape with rounded edges, with the upper part connected to the lower part through a central hole through which a fixing stud that allows height adjustment passes, with the lower part connected to the floor or the support base by means of two holes situated in wings located on opposite ends through which screws, rivets or any similar mechanical fixing means are fitted.

Both parts are made of a rigid material, preferably metal or high-strength thermoplastic. The lower part comprises an underside made of an elastic material, preferably rubber, to guarantee perfect adaptability to the floor and to any imperfections it may have.

The central part of the lower part has a circular recess housing a threaded stud in its central part, secured to the same lower part by a nut with the corresponding torque to prevent any misalignment the vibrations may cause.

The upper part, connected to the lower part is made up of a flat base upon which a silent block, preferably made of rubber or an elastic material, is positioned and whose function it is to provide the necessary damping to eliminate possible vibrations and provide the necessary acoustic isolation. The fact that it incorporates a silent block allows for better and more uniform distribution of the load of the floating floor. The silent block has a circular recess on each of its faces leaving a stabiliser free in a preferred number of four, formed by rectangular tabs, with a certain curvature, and which emerge upwards from the lower part.

The upper part has a hole, housing in its interior another hole threaded in its metal base through which a threaded stud passes that allows the height of the silent block to be adjusted.

Having defined the damper that has to be used in the configuration of a floating floor, the different processes for its embodiment are detailed:
Firstly the dampers are inserted onto the floor base or support base, preferably being fixed with screws, with a space of approximately 60 cm being left between them. This distance can be varied depending on the characteristics and dimensions of the floating floor.

It should be pointed out that both the fixing to the floor and the subsequent height adjustment can easily be carried out thanks to the fact that the elastic underside allows for perfect adaptation to the floor which guarantees perfect adaptability to the floor and to any imperfections it may have.

The height can easily be adjusted by means of a laser or by other means that allow it to be levelled, with all that is required being the rotation of the silent block on the stud thread until the height is perfectly aligned.

A second embodiment of the adjustable acoustic damper has also been designed, complementing the first embodiment of the invention, in which the silent block and the upper part are fixed onto the lower part, being complemented by a platform, of a shape coinciding with the upper part of the damper and connected to said upper part by a central threaded stud that allows by means of rotating this upper part its greater or lesser introduction into a female threaded opening situated in the central part of the upper cover, thereby varying the height of this platform and allowing the floating floor to be levelled easily.

The first and second embodiment of this adjustable acoustic damper are designed preferably for their application with floating floors, although they can also be applied perfectly for the isolating of industrial machines.

The procedure for installing the floating floor on the dampers is a characteristic of the invention and involves, once the height has been adjusted, positioning panels made of a damp-proof material on top of the dampers as an integral part of the future floating floor, and then placing mesh panels on top of this until the required space is covered.

The walls forming the floating floor receptacle must be covered with a plastic or similar material to prevent the concrete from hardening on them, thereby creating a floating floor.

The reinforced concrete is poured on the mesh thereby consolidating the floating floor, and any type of decorative flooring can then be applied onto this surface.

The first and second embodiments provide numerous advantages over currently available systems, the most important of which is the ease with which they can be mounted, based on the simple adjustment of the silent block, achieved simply by turning the silent block on the stud secured to the base or lower part.

The advantage provided by the use of several silent blocks preferably made of rubber, thereby aiding the elimination of vibrations and enhancing acoustic isolation, should also be pointed out.

All the embodiments of the adjustable acoustic damper offer the undeniable combined advantage of the invention which through its use provides greater adaptability to the floor or support, thanks to the underside made of an elastic material.

Finally, the advantage obtained through the undeniable constructive simplicity of the invention, the low cost this entails, and its extreme effectiveness, should not be overlooked.

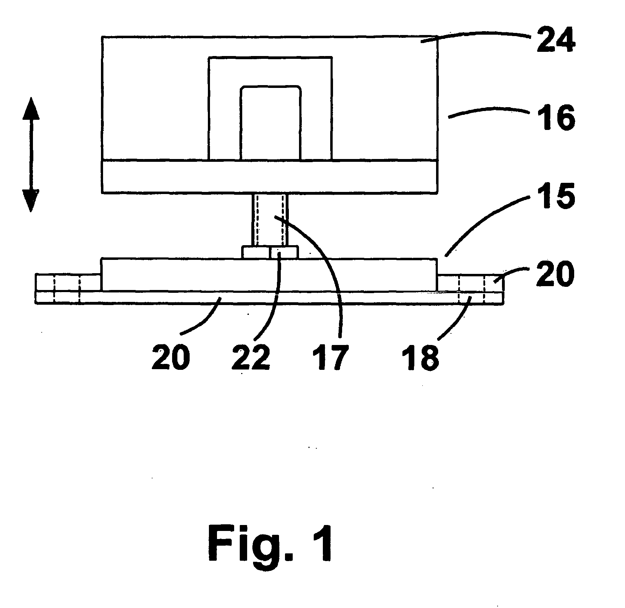

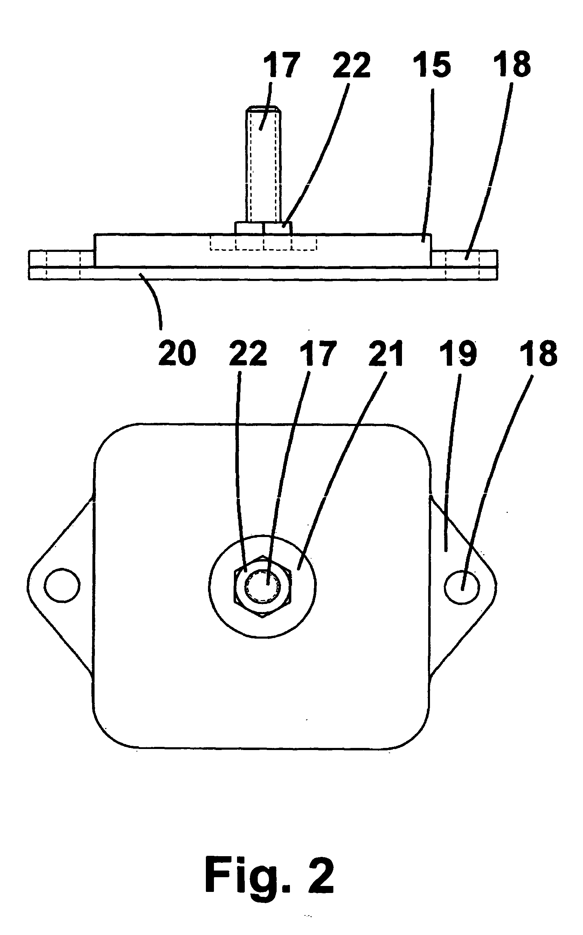

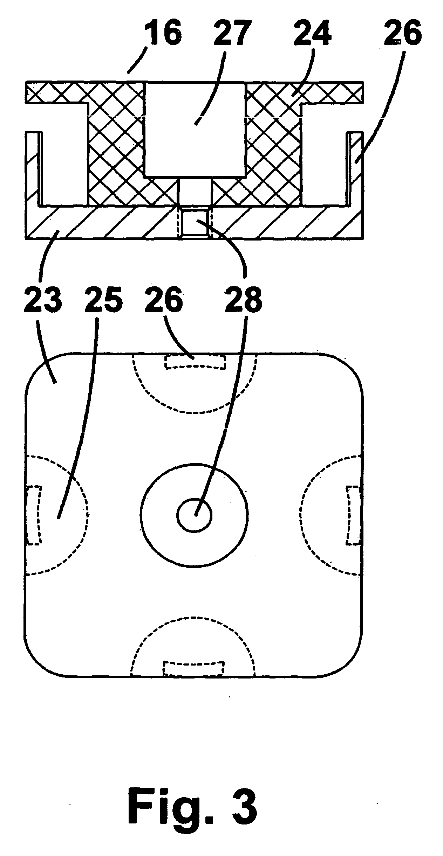

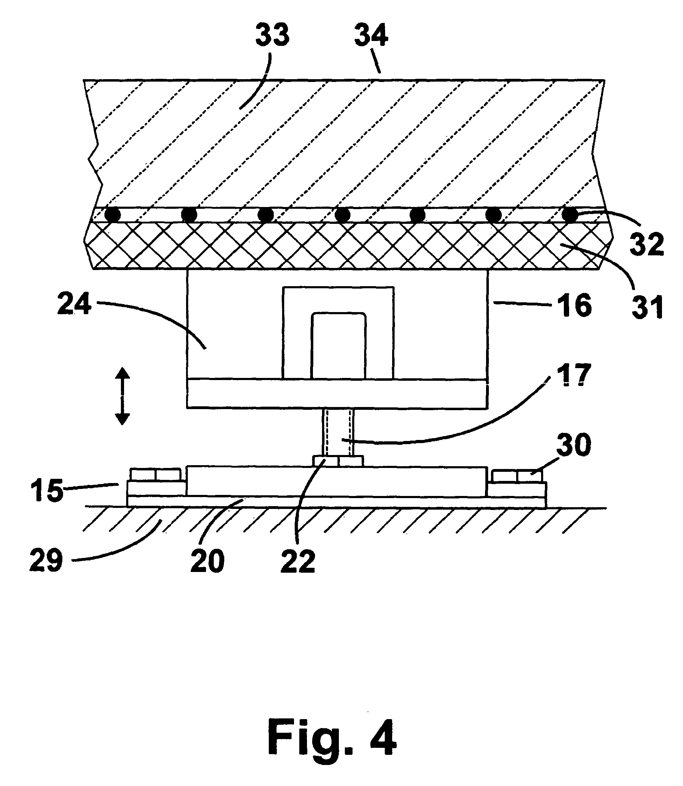

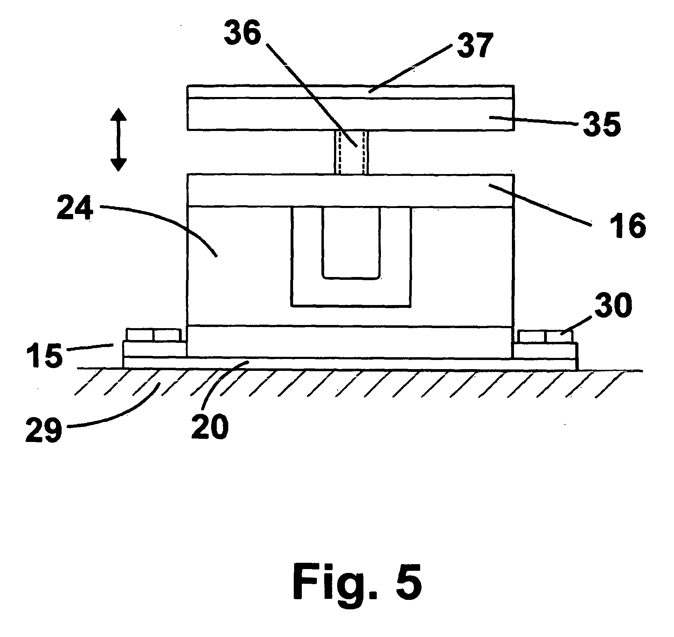

In order to gain a clearer understanding of the object of the present invention, two preferred practical embodiments of the adjustable acoustic damper are represented in the drawing attached.

In said drawing,
Figure -1- shows a side view of the first embodiment.
Figure -2- shows a front and side view of the lower part of the first embodiment.
Figure -3- shows a front and side view of the upper part of the first embodiment.
Figure -4- shows a side view of the first embodiment of the invention constituting a floating floor.
Figure -5- shows a side view of the second embodiment of the invention.

The first embodiment of the adjustable acoustic damper principally consists of two clearly differentiated parts (15 and 16) essentially square in shape with rounded edges, with the upper part (16) connected to the lower part (15) through a central hole through which a fixing stud (17) passes, and with the lower part (15) connected to the floor or the support base by means of two holes (18) situated in wings (19) located on opposite ends through which screws, rivets or any similar mechanical fixing means are fitted.

The lower part (15) comprises an underside (20) made of an elastic material, preferably rubber, to guarantee perfect adaptability to the floor and to any imperfections it may have.

The central part of the lower part (15) has a circular recess (21) housing a threaded stud (17) in its central part, secured to the same lower part (15) by a nut (22) with the corresponding torque to prevent any misalignment the vibrations may cause.

The upper part (16) consists of a flat base (23) upon which a silent block (24) preferably made of rubber or an elastic material is positioned and whose function it is to provide the necessary damping and acoustic isolation. The silent block (24) has a circular recess (25) on each of its faces leaving a stabiliser (26) free in a preferred number of four, formed by rectangular tabs, with a certain curvature, and which emerge upwards from the lower part.

The upper part has a hole (27), housing in its interior hole (28) threaded in its metal base through which a threaded stud (17) passes and which allows the height to be adjusted.

The second embodiment of the adjustable acoustic damper is similar to the first embodiment with the exception that the silent block (24) and the upper part (16) are fixed onto the lower part (15), being complemented by a platform (35), of a shape coinciding with the upper part (16) of the damper and connected to said upper part (16) by a central threaded stud (36) that allows by means of rotating this upper part its greater or lesser introduction into a female threaded opening situated in the central part of the upper part (16), thereby varying the height of this platform (35) and allowing easy levelling. This platform (35) has an upper cover (37) made of an elastic material, preferably rubber.

Having defined the specific embodiment of the damper, the different processes for its embodiment are detailed:
Firstly the dampers are installed on the floor base or support base (29), preferably being fixed with screws (30), with a space of approximately 60 cm being left between them. This distance can be varied depending on the characteristics, weight and dimensions of the floating floor.

The walls forming the floating floor receptacle (34) must be covered with a plastic or a similar material to prevent the concrete (33) from hardening on them.

The height can easily be adjusted by means of a laser or by other means that allow it to be levelled, with all that is required being the rotation of the silent block (24) on the stud (17) thread until the height is perfectly aligned.

Once the height has been adjusted panels made of a damp-proof material (31) are positioned on top of the dampers, with mesh panels (32) then being placed on top until the required space is covered.

The concrete (33) is poured on the mesh thereby consolidating the floating floor (34), and any type of decorative flooring can then be applied onto this surface.

It was decided to omit a detailed description of the other particular features of the system being disclosed or of the components forming part of it, as it was felt that the rest of said particular features are not the object of any claims.

Having described the nature of the present invention in sufficient detail, in addition to the means of putting it into practice, all that remains to be added is that its description is not restrictive, and that variations both in materials and shapes and sizes can be made provided that said variations do not alter the essential nature of the characteristics claimed below.

## Claims

1. Adjustable acoustic damper used in construction for the installation of floating concrete floors and adjustable beds formed by a lower part (15) and an upper part (16), both having a square shape with rounded edges of a metal or high-strength thermoplastic material, the lower part (15) incorporating a circular recess (21) in the centre of its upper side, housing in its centre a threaded stud (17), secured by a nut (22), having two wings (19) situated on opposing ends, each wing incorporating in its centre through holes (18), and incorporating an underside (20) made of an elastic material, the upper part (16) comprising a base (23) upon which a silent block (24) made of rubber or an elastic material is positioned, the silent block (24) comprising a partially circular recess (25) on each of its faces, leaving free four stabilisers (26) formed by rectangular tabs with a certain curvature emerging upwards from the base (23), the upper part of the silent block (24) comprising a hole (27), and the metal base (23) further having a hole (28), wherein the lower part (15) and the upper part (16) are connected by a threaded stud (17) that allows the height to be adjusted by means of rotating the silent block (24) on the thread of the stud (17) until the height is perfectly aligned..

2. Adjustable acoustic damper, according to claims 1, wherein the damper is fixed on the floor base or support base (29) by screws (30) through the holes (18) of the side wings (19).

3. Adjustable acoustic damper, according to claims 1 or 2, wherein the upper part (16) is fixed onto the base (15), being complemented by a platform (35), of a shape coinciding with the upper part (16) of the damper and connected to said upper part (16) by a central threaded stud (36) that allows by means of rotating this upper part its greater or lesser introduction into a female threaded opening situated in the central part of the upper part (16), thereby varying the height of this platform (35) and allowing easy levelling, with the platform (35) comprising an upper layer (37) of elastic material, preferably rubber.

4. Method for installing an acoustic damper according to any of the previous claims, **characterized in that** it comprises the following steps:
adjust the height of the damper
position panels of damp-proof material (31) on top of the dampers
position mesh panels (32) on top of the damp-proof material (31)
pour concrete (33) on top of the mesh panels (32) in order to consolidate a floating floor (34)

## Patentansprüche

1. Einstellbarer akustischer Dämpfer, der in der Baubranche für die Installation von Fließbetonböden und einstellbaren Fundamenten verwendet wird, gebildet aus einem unteren Teil (15) und einem oberen Teil (16), wobei beide eine rechteckige Form mit abgerundeten Kanten aus einem metallischen oder hochfesten thermoplastischen Material besitzen, wobei der untere Teil (15) eine kreisförmige Vertiefung (21) in der Mitte seiner oberen Seite einschließt, in deren Mitte ein Gewindebolzen (17) aufgenommen ist, der von einer Mutter (22) gesichert wird, die zwei auf gegenüberliegenden Enden angeordnete Flügel (19) besitzt, wobei jeder Flügel in dessen Mitte Durchgangsbohrungen (18) einschließt, und der eine aus einem elastischen Material bestehende Unterseite (20) umfasst, wobei der obere Teil (16) eine Grundplatte (23) einschließt, auf der ein Silentblock (24) positioniert ist, der aus einem Gummi- oder elastischen Material besteht, wobei der Silentblock (24) eine teilweise kreisförmige Vertiefung (25) auf jeder seiner Seiten umfasst, wobei vier Stabilisatoren (26) frei gelassen werden, die von rechteckigen Klappen mit einer gewissen Krümmung gebildet werden, welche nach oben aus der Grundplatte (23) hervortreten, wobei der obere Teil des Silentblocks (24) eine Bohrung (27) umfasst und die Metallgrundplatte (23) weiterhin eine Bohrung (28) besitzt, worin der untere Teil (15) und der obere Teil (16) durch einen Gewindebolzen (17) verbunden sind, der es erlaubt, die Höhe mittels einer Drehung des Silentblocks (24) auf dem Gewindebolzen (17) zu justieren, bis die Höhe perfekt ausgerichtet ist.

2. Einstellbarer akustischer Dämpfer nach Anspruch 1, wobei der Dämpfer auf der Bodenplatte oder Trägerplatte (29) mittels Schrauben (30) durch die Bohrungen (18) der Seitenflügel (19) befestigt ist.

3. Einstellbarer akustischer Dämpfer nach Anspruch 1 oder 2, wobei der obere Teil (16) auf der Grundplatte (15) befestigt ist, die durch eine Plattform (35) ergänzt wird, welche eine Form in Übereinstimmung mit dem oberen Teil (16) des Dämpfers besitzt und die mittels eines Gewindebolzens (36) an dem besagten oberen Teil (16) befestigt ist, welcher es mittels einer Drehung erlaubt, diesen tiefer oder weniger tief in eine Gewindebohrung einzuführen, die sich in dem zentralen Teil des oberen Teils (16) befindet, wodurch die Höhe dieser Plattform (35) variiert und eine einfache Nivellierung erlaubt wird, wobei die Plattform (35) eine obere Schicht (37) aus elastischem Material, vorzugsweise Gummi, umfasst.

4. Eine Methode zur Installation eines akustischen Dämpfers nach einem der vorherigen Ansprüche, **dadurch gekennzeichnet, dass** diese die folgenden Schritte umfasst:
Einstellung der Höhe des Dämpfers;
Positionierung von Paneelen aus feuchtigkeitsbeständigem Material (31) über den Dämpfern;
Positionierung von Maschenpaneelen (32) über dem feuchtigkeitsbeständigen Material (31);
Gießen von Beton (33) über die Maschenpaneele (32), um einen schwimmenden Estrich (34) zu konsolidieren.

## Revendications

1. Un silencieux acoustique réglable utilisé dans la construction pour la mise en place de dalles flottantes en béton et de lits réglables, constitué d'une partie inférieure (15) et d'une partie supérieure (16), toutes deux de forme carrée aux bordures arrondies, en métal ou en matière thermoplastique de haute résistance, la partie inférieure (15) possédant une cavité circulaire (21) située au milieu du côté supérieur, au centre duquel est logé un goujon fileté (17), serré par un écrou (22), composé de deux ailes (19) placées aux extrémités opposées, chaque aile étant dotée d'orifices (18) en son centre, et comprenant une assiette (20) fabriquée en matière élastique, la partie supérieure (16) comprenant une base (23) sur laquelle est placé un support élastique (24) en caoutchouc ou en matière élastique, le support élastique (24) étant doté d'une cavité semi-circulaire (25) sur chacun de ses côtés, permettant le mouvement de quatre barres de stabilisation (26) constituées d'antichambres rectangulaires dont le cambrage fait qu'elles s'étendent au dessus de la base (23), la partie supérieure du support élastique (24) comprenant un orifice (27), la base en métal (23) étant dotée d'un autre orifice (28), permettant de relier la partie inférieure (15) et la partie supérieure (16) au moyen d'un goujon fileté (17) qui permet de régler la hauteur en faisant tourner le support élastique (24) sur le filetage du goujon (17) jusqu'à ce que la hauteur soit parfaitement alignée.

2. Un silencieux acoustique réglable, selon la revendication 1, dans lequel le silencieux est monté sur la base de la dalle ou sur la base du support (29) au moyen de vis (30) placées dans les orifices (18) des ailes latérales (19).

3. Un silencieux acoustique réglable, selon les revendications 1 ou 2, dans lequel la partie supérieure (16) est montée sur la base (15), complété par une plate forme (35), dont la forme correspond à la partie supérieure (16) du silencieux, reliée à ladite partie supérieure (16) par un goujon fileté central (36) que l'on peut, en faisant tourner la partie supérieure, introduire plus ou moins profondément dans une ouverture femelle filetée située dans la partie centrale de la partie supérieure (16), ce qui permet de modifier la hauteur de la plate forme (35) en la déplaçant facilement, la plate forme (35) comprenant une couche supérieure (37) en matière élastique, de préférence en caoutchouc.

4. Une méthode pour mettre en place un silencieux acoustique selon n'importe laquelle des revendications précédentes, **caractérisée en ce qu'**elle comprend les étapes suivantes :
Le réglage de la hauteur du silencieux
La mise en place de panneaux résistants à l'humidité (31) au dessus des silencieux
La mise en place de panneaux treillis (32) au dessus panneaux résistants à l'humidité (31)
Le coulage de béton (33) au dessus des panneaux treillis (32) pour consolider la dalle flottante (34)
